(19) Europäisches Patentamt
European Patent Office
Office européen des brevets

(11) Publication number: **0 010 773**
**B1**

(12) **EUROPEAN PATENT SPECIFICATION**

(45) Date of publication of patent specification: **16.02.83**

(51) Int. Cl.$^3$: **C 08 L 67/02**

(21) Application number: **79104301.1**

(22) Date of filing: **05.11.79**

(54) **Thermoplastic polyester resinous composition.**

(30) Priority: **06.11.78 JP 135733/78**

(43) Date of publication of application:
**14.05.80 Bulletin 80/10**

(45) Publication of the grant of the patent:
**16.02.83 Bulletin 83/7**

(84) Designated Contracting States:
**DE FR GB IT NL**

(56) References cited:
**FR - A - 1 496 659**

**CHEMICAL ABSTRACTS, vol. 87, no. 2, 11 July 1977, abstract 6967p, blz. 45, Columbus, Ohio, US**

(73) Proprietor: **TORAY INDUSTRIES, INC.**
**2, Nihonbashi-Muromachi 2-chome Chuo-ku**
**Tokyo 103 (JP)**

(72) Inventor: **Kometani, Kiichi**
**No. 1-82, Ikegamidai Midori-ku**
**Nagoya-shi Aichi-ken (JP)**
Inventor: **Okasaka, Hotsuma**
**No. 2-28-13, Bunkyo-cho Mishima-shi**
**Shizuoka-ken (JP)**

(74) Representative: **Weber, Dieter, Dr. et al,**
**Dr. Dieter Weber und Klaus Seiffert**
**Patentanwälte Gustav-Freytag-Strasse 25**
**D-6200 Wiesbaden 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Thermoplastic polyester resinous composition

The present invention relates to a thermoplastic polyester resinous composition and more particularly to a resinous composition having improved form stability in melt, improved thermal stability, and improved mechanical properties including impact strength.

Thermoplastic polyesters have been provided as molding resinous material in various molding operations, for example injection molding, blow molding and extrusion molding. Especially in the case of shaping bottles by blow molding, and of tubes by extrusion molding, it is necessary that the molten resin (parison) maintains a uniform shape during processing, that is, it is required to have excellent form stability in melt. To improve the form stability in melt, it is required to impart both high melt viscosity and melt strength to the polyester.

There have been many attempts to accomplish this. One method is to add a suitable chain extending agent such as an epoxy compound, by which the melt-stability of polyester can be improved to some extent, for example according to "Chemical Abstracts", Vol. 87, page 45 (1977), 87: 6967p. By this method, however, it is not possible to improve the polyester to a satisfactorily high level in respect of both melt viscosity and melt strength. Therefore the co-use of various compounds together with an epoxy compound has also been proposed in order to improve the form stability in melt.

For example, the addition of an amine compound can highly improve the melt viscosity of a polyester, but at the same time the polyester composition tends to become colored. In the Japanese patent publication No. 52—129,759, the addition of metal salts of a carboxylic acid is proposed. Although the resulting color development is very small in these cases, the improvement in melt viscosity and melt strength is not very great either, and is not enough. Thus, the methods heretofore proposed do not fulfil the above mentioned objectives, certainly not at a satisfactorily high level.

It has been suggested that when a thermoplastic polyester is subjected to injection molding, epoxy compounds are added to the thermoplastic polyesters in order to improve their impact resistance, in particular their notched Izod impact strength. In the German patent No. 2,622,876, various compolymers comprising ethylene, unsaturated monomers containing the glycidyl group and other unsaturated monomers are proposed as such epoxy compounds. The Japanese patent publication No. 52—32,045 also discloses copolymers comprising $\alpha$-olefins, glycidyl methacrylates and vinyl acetate. Similarily, the US-patent No. 4,034,013 discloses a multiple stage polymer having a rubbery first stage and an epoxy functional hard final stage.

In these cases, however, the improvement of the impact strength of the polyester is not sufficient to satisfy practical needs. Therefore still further improvements are required.

The FR-patent No. 1,496,659 discloses polyester compositions containing alkali metal or alkali earth metal salts of organic sulfonic acids which are added to avoid discoloration. But the patent does not show the use of such sulfonate salts to impart high melt viscosity or high melt strength to polyester compositions.

Thus, an object of the present invention is to provide a thermoplastic polyester resinous composition which has excellent form stability in melt, and which also has excellent thermal stability.

Another object of the present invention is to provide a thermoplastic polyester resinous composition having improved impact strength.

The present invention relates to a thermoplastic polyester resinous composition comprising per 100 parts by weight of a thermoplastic polyester having relative viscosities of 1.1 to 1.8 as measured in an o-chlorophenol solution of 0.5 wt.% concentration at 25°C, from 0.1 to 40 parts by weight of at least one compound containing at least one epoxy group, characterized in that the composition comprises additionally, per 100 parts by weight of the thermoplastic polyester, from 0.001 to 10 parts by weight of at least one member selected from the group consisting of organic sulfonate salts having the general formula $R^3(SO_3M)_m$ and organic sulfate salts having the general formula $R^4(OSO_3M)_{m'}$, wherein M is a metal atom, $R^3$ is phenyl, alkyl phenyl, wherein the alkyl group has 10 to 30 carbon atoms, $\alpha$-naphthyl, $\beta$-naphthyl, dodecylnaphthyl, allyl or methallyl in which case m is an integer from 1 to 3 or $R^3$ is polystyrene in which case m is greater than 3, $R^4$ is alkyl or a polyalkylene oxide group having 10 to 30 carbon atoms and m' is an integer from 1 to 3 or compounds of the formula

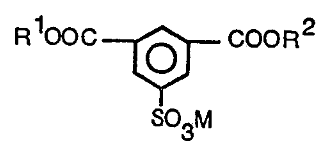

wherein $R^1$ and $R^2$ are methyl, ethyl, phenyl, 2-hydroxyethyl or 4-hydroxybutyl and M is a metal atom.

The main component of the thermoplastic polyesters employed in the practice of the present invention are polymers or copolymers prepared by condensing a dicarboxylic acid (or an ester forming compound thereof) with a glycol (or an ester forming compound thereof).

Among the dicarboxylic acids suitable for preparing polyesters in accordance with the present invention are the aromatic dicarboxylic acids such as terephthalic acid, isophthalic acid, orthophthalic acid, 2,6-naphthalene dicarboxylic acid, 1,5-naphthalene dicarboxylic acid, bis-(p-carboxyphenyl)methane, anthracene dicarboxylic acid or 4,4'-diphenylether dicarboxylic acid, aliphatic dicarboxylic acids such as adipic acid, sebacic acid, or azelaic acid, cycloaliphatic dicarboxylic acids such as 1,3-cyclohexane dicarboxylic acid, 1,4-cyclohexane dicarboxylic acid or ester-forming compounds thereof.

The glycols suitable for preparing polyesters in accordance with the present invention include aliphatic diols having 2 to 10 carbon atoms such as ethylene glycol, 1,3-propylene glycol, 1,4-butanediol, neopentylglycol, 1,5-pentanediol, 1,6-hexanediol, decamethylene glycol, cyclohexanediol, long chain glycols having molecular weights in the order of 400 to 6,000 such as poly(ethylene glycol), poly(1,3-propylene glycol) or poly(tetramethylene glycol). Mixtures of these glycols can also be employed.

Preferable polyesters are poly(ethylene terephthalate), poly(propylene terephthalate), poly(butylene terephthalate), poly(butylene sebacate) and poly(ethylene 2,6-naphthalate). Among these poly(butylene terephthalate) is more preferably used because of its excellent mechanical properties.

The polyester in this invention may preferably have a relative viscosity between 1.1 and 1.8 as measured in an o-chlorophenol solution of 0.5 wt.% concentration at 25°C. When the relative viscosity of the polyester is less than 1,1, the resinous composition does not exhibit sufficient form stability in melt. When the relative viscosity of the polyester is above 1.8, good surface gloss of the molded article cannot be obtained.

The second component is defined as a compound posessing at least one epoxy group. The epoxy compounds suitable for the present invention include bisphenol type epoxy compounds prepared by the reaction of bisphenol A with epichlorohydrin in various ratios, novolak type epoxy compounds prepared by reaction of novolak resins with epichlorohydrin, various types of polyglycidyl esters which can be prepared from polycarboxylic acids and epichlorhydrin, cycloaliphatic epoxy compounds which can be prepared by oxidation of cycloolefin compounds such as dicyclopentadiene, glycidyl ethers which can be prepared from aliphatic alcohols and epichlorohydrin, epoxidized polybutadiene, various copolymers containing epoxy groups prepared by copolymerization of unsaturated monomers containing epoxy groups and other unsaturated monomers. Preferable examples of the epoxy compounds are the bisphenol A type epoxy compounds represented by the following formula:

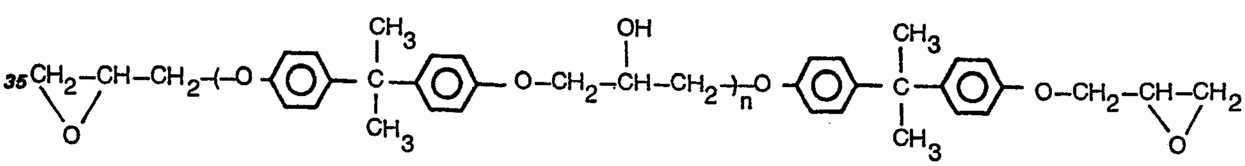

(where n is an integer from 0 to 20) and copolymers such as ethylene/glycidyl methacrylate, ethylene/vinyl acetate/glycidyl methacrylate, ethylene/carbon monoxide/glycidyl methacrylate and ethylene/glycidyl acrylate. Among the above epoxy compounds the one considered most suitable for the practice of this invention is ethylene/glycidyl methacrylate.

The epoxy compounds employed can be substituted by halogen atoms such as chloro and bromo atoms, while nitrogen containing epoxy compounds are not preferred because they tend to cause discoloration.

The amount of the compound containing at least one epoxy group to be added is 0.1 to 40, preferably 1 to 30 parts by weight per 100 parts by weight of the thermoplastic polyester. If the amount of this compound is too small, sufficient form stability in melt cannot be attained, while too much of this component imparts undesirable properties to the resulting composition.

The third component is a compound selected from the group consisting of organic sulfonic acid salts and organic sulfate salts. These are represented by the general formulas: $R^3(SO_3M)_m$ and $R^4(OSO_3M)_{m'}$, respectively. M may be a metal selected from the group consisting of alkali metals such as lithium, sodium and potassium, alkaline earth metals such as magnesium, calcium, strontium and barium, and other metals such as zinc, and aluminium. m and m' represent the number of sulfonate and sulfate groups. If $R^3$ is phenyl, alkyl phenyl wherein the alkyl group has 10 to 30 carbon atoms, α-naphthyl, β-naphthyl, such as dodecylphenyl, dodecyl naphthyl, allyl or methallyl, m is an integer from 1 to 3, preferably 1 or 2. If $R^3$ is polystyrene, m is greater than 3. Also m' is an integer from 1 to 3, preferably 1 or 2. $R^4$ is alkyl or a polyalkylene oxide group having 10 to 30 carbon atoms which may be substituted by an aromatic group.

A preferable group of organic sulfonate salts is represented by the general formula:

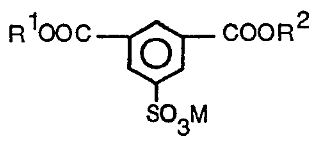

where M is the same as defined above; $R^1$ and $R^2$ are same or different organic groups selected from methyl, ethyl, phenyl, 2-hydroxyethyl, and 4-hydroxybutyl groups. Another preferable type of the organic sulfonate salt is that of alkyl benzene sulfonate salts wherein the alkyl group has 10 to 30 carbon atoms. A typical example is sodium dodecylbenzene sulfonate. Other special examples of the organic sulfonate salts include sodium methallyl-sulfonate, potassium 1,5-naphthalene-disulfonate, the condensed product of sodium naphthalene-sulfonate and formaldehyde and sodium salts of sulfonated poly(styrene).

Preferable organic sulfate salts include sodium laurylsulfate, potassium laurylsulfate, calcium stearylsulfate, barium stearylsulfate, sodium poly(oxyethylene ethylethersulfate) and sodium dodecylphenoxy-polyoxyethylenesulfate. More preferable members of the organic sulfonate and/or sulfate salts are sodium 3,5-dicarbomethoxybenzenesulfate and potassium 3,5-dicarbomethoxybenzenesulfonate. Also more than two kinds of the organic sulfonate and/or sulfate salts can be used in the present invention.

Such members of the organic sulfonate and/or sulfate salts may be copolymerized with the polyester component.

The amount of the organic sulfonate and/or sulfate salts is 0.001 to 10, preferably 0.005 to 3 parts by weight per 100 parts by weight of the thermoplastic polyester. If the amount of the said salts is too small, sufficient form stability in melt cannot be attained. But if too much of the said salts is used, desirable results corresponding thereto cannot be obtained.

If desired, the composition of the present invention may be subjected to addition of various additives such as fibrous or granular reinforcements and fillers including glass fibers, glass beads, glass flakes, carbon fibers, calcium carbonat, magnesium carbonates, barium sulfates, granular silicas, wollastonites, talcs, clays, micas, sericites, zeolites, bentonites, dolomites, kaolinites, asbestos and feldspars; antioxidants and heat-stabilizers selected from hindered phenols, hydroquinones, thioethers and phosphites; ultraviolet absorbents selected from various substituted benzotriazoles, benzophenones, salicylates and resorcinols; lubricants and mold release agents selected from stearic acid, stearates, montanic acid, montan wax, montanates, stearyl alcohol and stearylamides such as ethylene bis(stearamide); coloring agents including dyes and pigments such as carbon black, titanium dioxide, cadmium sulfide and phthalocyanines; flame retardants selected from halogen substituted aromatic compounds such as decabromodiphenyl ether, brominated polycarbonates, melamine compounds, cyanuric acid derivatives and phosphorus compounds; flame retarding adjuvants such as antimony trioxide and zirconium oxide; nucleating agents and antiwear agents, insofar as the characteristics of the resulting compositions are not deteriorated. More than two of above mentioned additives can be added. Further, if desired, the composition of the present invention can be subjected to the addition of small amounts of other thermoplastic resins such as polyethylenes, polypropylenes, acrylic resins, fluoro-containing polymers, polyacetals, polycarbonates, polysulfones or polyphenyleneoxides, thermosetting resins such as phenolic resins, melamine resins, unsaturated polyester resins, silicone resins or epoxy resins, and elastomeric thermoplastic resins such as ethylene-vinylacetate-copolymers, ethylenepropylene-terpolymers and block-copolyetheresters. More than two types of the above mentioned resins may be added.

Many methods may be used for preparing the resinous compositions of the present invention. Various conventional blending methods can be employed. The mixture of three components may preferably be accomplished by extrusion at a temperature above the melting point of the thermoplastic polyester. The resinous composition of the present invention can be molded according to conventional methods such as extrusion molding, blow molding and injection molding.

The resinous composition of the present invention has excellent form stability in melt, and further excellent mechanical properties including impact strength.

The present invention is illustrated below in detail with reference to examples by way of illustration.

In the illustrative examples and comparative examples, the properties of the resinous composition are determined according to the following methods:

*Melt viscosity:*

Melt viscosity is measured with a Kaka type flow tester at 250°C.

*Melt strength:*

At a temperature sufficient to keep the resin composition in a molten state (250°C in the following examples), the melt is extruded from the melt indexer under constant load. The time ($T_1$) necessary for extruding to a strand length from the bottom of the cylinder of the melt indexer is measured. Continuously, the time (T) necessary for extruding 20 cm length of the same strand from the bottom of the melt indexer is measured. $T_2$ is defined as $T—T_1$. And the melt strength (MS) is defined as the ratio of $T_1$ to $T_2$, as in the following formula.

$$MS = \frac{T_1}{T_2}$$

It is preferable that the resin compositions subjected to extrusion molding have a melt strength within the range of 1.0 to 2.0. Most preferably the melt strength value is 1.0, that is, the first 10 cm length of the strand is extruded at the same velocity as the second 10 cm length thereof. A resinous composition having a poor melt strength shows a value of $T_1/T_2$ much greater than 1.0. In such a case the second part of the strand is extruded at a much higher velocity than the first part. Consequently, this means that a resinous composition having a high value of $T_1/T_2$ has poor form stability in melt.

*Izod impact strength:*

Izod impact strength is determined according to ASMT D—256 by use of a notched Izod impact test piece 1/2 inch wide.

Examples 1 to 7, Comparative Examples 1 to 7

Resinous compositions were prepared each containing 100 parts by weight of a polyester having a relative viscosity of 1.61 which was produced by condensing terephthalic acid as the dicarboxylic acid constituent with 1,4-butanediol as the glycol constituent, the proportions being illustrated in Table I. The components were extruded in a screw extruder at a temperature of 250°C and the extruded strands were pelletized. For comparison purposes, one composition (H) was made by omitting the epoxy compound and the organic sulfonate salt or the organic sulfate salt, three compositions (I to K) were made by omitting the organic sulfonate salt or the organic sulfate salt, two compositions (L, M) were made by omitting the epoxy compound, and the composition (N) was made by substituting the organic sulfonate salt or the organic sulfate salt by calcium stearate.

The results in terms of melt viscosities and melt strengths are illustrated in Table I.

Subsequently, the pellets obtained were injection molded at 250°C (mold; 80°C) into ASTM D—256 type impact strength test pieces in a 5 oz. screw inline type injection molding machine. The impact strengths obtained are illustrated in Table I.

TABLE I

| | Resin Composition | Epoxy compound (parts by weight) | | Organic sulfonate and Sulfate Salt (parts by weight) | | Melt Viscosity ($10^4$ poise) | Melt Strength | Notched Izod Impact Strength (Kg cm/cm) |
|---|---|---|---|---|---|---|---|---|
| A | Example 1 | "Epikote" 1001[a)] | (3) | SSIA[d)] | (0.1) | 2.5 | 1.6 | 3.6 |
| B | Example 2 | "Epikote" 1001[a)] | (3) | SDBS[e)] | (0.1) | 2.4 | 1.6 | 3.5 |
| C | Example 3 | "Epikote" 1001[a)] | (3) | SLS[f)] | (0.01) | 2.7 | 1.5 | 3.5 |
| D | Example 4 | E/GMA[b)] | (10) | SSIA[d)] | (0.05) | 3.4 | 1.5 | 9.0 |
| E | Example 5 | E/GMA[b)] | (10) | GSIA[g)] | (0.05) | 3.2 | 1.5 | 8.5 |
| F | Example 6 | E/GMA[b)] | (10) | SDBS[e)] | (0.05) | 3.1 | 1.5 | 8.7 |
| G | Example 7 | "BF—1000"[c)] | (2) | SLS[f)] | (0.01) | 2.8 | 1.7 | 4.0 |

TABLE I (continued)

| Resin Composition | Epoxy Compoundand (parts by weight) | Organic Sulfonate Sulfate Salt (parts by weight) | Melt Viscosity ($10^4$ poise) | Melt Strength | Notched Izod Impact Strength (Kg cm/cm) |
|---|---|---|---|---|---|
| H Comparative Example 1 | — | — | 1.1 | 3.1 | 2.9 |
| I Comparative Example 2 | Epikote® 1001[a] (3) | — | 1.2 | 3.1 | 3.0 |
| J Comparative Example 3 | E/GMA[b] (10) | — | 1.6 | 2.4 | 4.5 |
| K Comparative Example 4 | "BF—1000"[c] (2) | — | 1.0 | 3.3 | 3.3 |
| L Comparative Example 5 | — | SSIA[d] (0.1) | 1.0 | 3.1 | 2.8 |
| M Comparative Example 6 | — | SDBS[e] (0.1) | 1.0 | 3.1 | 2.8 |
| N Comparative Example 7 | E/GMA[b] (10) | CST[h] (0.1) | 1.7 | 2.4 | 4.5 |

Notes:

a) Epikote® 001; An epoxy compound of the glycidyl ether of bisphenol A type, molecular weight about 900, a produce of Shell Company.

b) E/GMA; A copolymer of ethylene/glycidyl methacrylate, about 90/10 ratio by weight, melt index 3.

c) "BF—1000"; A epoxidized polybutadiene, molecular weight about 1000, a product of Adeka Argus Chemical Company.

d) SSIA; sodium 3,5-dicarbomethoxybenzenesulfonate

e) SDBS; sodium dodecylbenzenesulfonate

f) SLS; sodium laurylsulfate

g) CSIA; calcium 3,5-dicarbomethoxybenzenesulfonate

h) CST; calcium stearate

The data in Table I demonstrate that in comparison with the Comparative Examples, the compositions containing polyester, an epoxy compound, and a sulfonate or an organic sulfate have significantly higher melt viscosities and melt strengths. In addition, as is clear upon comparison of Examples 4 to 6 with Comparative Examples 3 and 7, compositions consisting of polyester, a copolymer containing epoxy groups and an organic sulfonate or an organic sulfate salt have excellent impact strength.

Examples 8 to 14, Comparative Examples 8 to 14

The polyester resinous compositions prepared in the Examples 1 to 7 were extruded through a crosshair die to form parisons having an outer diameter of 22 mm and a thickness of 2 mm. The melt was maintained at a temperature of 250°C. The parisons were blow molded into reagent bottles in a mold at about 80°C. The result of evaluation in respect to the states of parisons and blow molded bottles is illustrated in Table II. In addition, the results obtained on the resins H to N are illustrated in Table II.

As is clear from Table II, resinous compositions consisting essentially of a thermoplastic polyester, an epoxy compound, and an organic sulfonate or an organic sulfate salt have excellent properties for blow molding bottles.

Example 15, Comparative Examples 15 to 17

A polyester resinous composition was prepared containing 100 parts by weight of a polyester having a relative viscosity of 1.54 which was produced by condensing terephthalic acid with 1,4-butanediol, 40 parts by weight of glass fibers (CS—3PE—231, a product of Nitto Boseki Co. Ltd), 10 parts by weight of E/GMA, and 0.02 parts by weight of SSIA. The component was extruded in a screw extruder at 250°C and the extruded strands were pelletized. The pellets obtained were injection molded under the conditions of Examples 1 to 8 into ASTM D—256 type impact strength test pieces. For comparison purposes, three compositions were made omitting E/GMA and/or SSIA. The results are shown in Table III.

TABLE II

| | Resin Compositions | States of Parisons | States of Molded Bottles |
|---|---|---|---|
| Example 8 | A | no drawdown | good |
| „ 9 | B | „ | „ |
| „ 10 | C | „ | „ |
| „ 11 | D | „ | „ |
| „ 12 | E | „ | „ |
| „ 13 | F | „ | „ |
| „ 14 | G | „ | „ |
| Comparative Example 8 | H | great drawdown | impossible to mold |
| „ 9 | I | „ | „ |
| „ 10 | J | considerable drawdown | uneven in thickness |
| „ 11 | K | great drawdown | impossible to mold |
| „ 12 | L | „ | „ |
| „ 13 | M | „ | „ |
| „ 14 | N | considerable drawdown | uneven in thickness |

TABLE III

| | Additives (parts by weight) | | Notched Izod Impact Strength |
|---|---|---|---|
| | E/GMA | SSIA | (kg cm/cm) |
| Example 15 | 10 | 0.02 | 13.5 |
| Comparative Example 15 | — | — | 6.5 |
| „ 16 | 10 | — | 8.8 |
| „ 17 | — | 0.02 | 6.5 |

The data in Table III demonstrate that the composition of the present invention has excellent impact strength.

Example 16, Comparative Examples 18 to 19

A polyester resinous composition was prepared containing 100 parts by weight of a polyester having a relative viscosity of 1.34 which was produced by condensing terephthalic acid with ethylene glycol, 40 parts by weight of glass fibers (CS—3PE—231, a product of "Nitto Boseki Co Ltd."), 10 parts by weight of E/GMA, and 0.01 parts by weight of SSIA. The component was extruded and injec-

tion molded undêr the same conditions as Example 14, except that the setting temperature was 280°C (mold; 120°C).

For comparison purpose three compositions were made omitting E/GMA and/or SSIA. The test results are shown in Table IV.

TABLE IV

| | Additive (parts by weight) | | Notched Izod Impact Strength |
|---|---|---|---|
| | E/GMA | SSIA | (kg cm/cm) |
| Example 16 | 10 | 0.01 | 12.2 |
| Comparative Example 18 | — | — | 5.7 |
| „ 19 | 10 | — | 7.9 |
| „ 20 | — | 0.01 | 5.6 |

Compositions according to this invention, having good impact strengths, are obtained.

**Claims**

1. A thermoplastic polyester resinous composition comprising per 100 parts by weight of a thermoplastic polyester having relative viscosities of 1.1 to 1.8 as measured in an o-chlorophenol solution of 0.5 wt.% concentration at 25°C, from 0.1 to 40 parts by weight of at least one compound containing at least one epoxy group, characterized in that the composition comprises additionally, per 100 parts by weight of the thermoplastic polyester, from 0.001 to 10 parts by weight of at least one member selected from the group consisting of organic sulfonate salts having the general formula $R^3(SO_3M)_m$ and organic sulfate salts having the general formula $R^4(OSO_3M)_{m'}$, wherein M is a metal atom, $R^3$ is phenyl, alkyl phenyl, wherein the alkyl group has 10 to 30 carbon atoms, $\alpha$-naphthyl, $\beta$-naphthyl, dodecylnaphthyl, allyl or methallyl in which case m is an integer from 1 to 3 or $R^3$ is polystyrene in which case m is greater than 3, $R^4$ is alkyl or a polyalkylene oxide group having 10 to 30 carbon atoms, and m′ is an integer from 1 to 3 or compounds of the formula

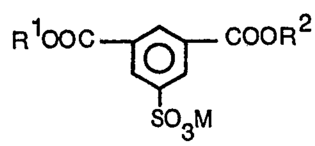

wherein $R^1$ and $R^2$ are methyl, ethyl, phenyl, 2-hydroxyethyl or 4-hydroxybutyl and M is a metal atom.

2. A composition as defined in Claim 1, characterized in that the thermoplastic polyester is poly(alkylene terephthalate).

3. A composition as defined in Claim 2, characterized in that the poly(alkylene terephthalate) is poly(butylene terephthalate).

4. A composition as defined in any of the Claims 1 to 3, characterized in that the amount of the compound containing at least one epoxy group is from 1 to 30 parts by weight.

5. A composition as defined in any of the Claims 1 to 4, characterized in that the compound containing at least one epoxy group is a copolymer containing epoxy groups and is prepared from unsaturated monomers containing an epoxy group and unsaturated monomers not containing an epoxy group.

6. A composition as defined in Claim 5, characterized in that the copolymer containing epoxy groups is an ethylene/glycidyl methacrylate copolymer.

7. A composition as defined in any of the Claims 1 to 6, characterized in that the organic sulfonate salt has the formula:

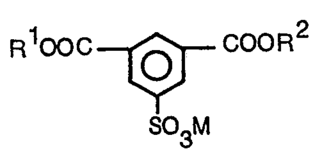

wherein M is a member selected from the group consisting of alkali metals, alkaline earth metals, zinc and aluminum; and wherein $R^1$ and $R^2$ are monovalent organic radicals selected from the group consisting of methyl, ethyl, phenyl, 2-hydroxyethyl and 4-hydroxybutyl.

8. A composition as defined in any of the Claims 1 to 7, characterized in that the organic sulfonate salt is an alkyl benzene sulfonate salt, wherein the alkyl group has 10 to 30 carbon atoms and wherein the salt contains a metal ion selected from the group consisting of the alkali metals, alkaline earth metals, zinc and aluminum.

**Revendications**

1. Composition résineuse thermoplastique de polyester, comprenant, pour 100 parties en poids d'un polyester thermoplastique ayant des viscosités relatives de 1,1 à 1,8, comme mesurées dans une solution d'o-chlorophénol à une concentration de 0,5% en poids à 25°C, de 0,1 à 40 parties en poids d'au moins un composé contenant au moins un groupe époxy, caractérisée en ce que la composition comprend, en outre, pour 100 parties en poids du polyester thermoplastique, de 0,001 à 10 parties en poids d'au moins un membre choisi dans le groupe se composant de sels formés de sulfonates organiques, ayant la formule générale $R^3(SO_3M)_m$ et de sels formés de sulfates organiques ayant la formule générale $R^4(OSO_3M)_{m'}$, où M est un atome de métal, $R^3$ est le groupe phényle, un groupe alkylphényle, où le groupe alkyle a 10 à 30 atomes de carbone, le groupe $\alpha$-naphtyle, $\beta$-naphtyle, dodécylnaphtyle, allyle ou méthallyle et, dans ce cas, m est un nombre entier de 1 à 3, ou $R^3$ est un polystyrène et, dans ce cas, m est supérieur à 3, $R^4$ est un groupe alkyle ou un groupe oxyde de polyalkylène ayant 10 à 30 atomes de carbone, et m' est un nombre entier de 1 à 3, ou les composés ayant la formule:

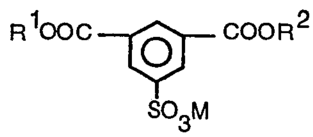

où $R^1$ et $R^2$ sont le groupe méthyle, éthyle, phényle, 2-hydroxyéthyle ou 4-hydroxybutyle et M est un atome de métal.

2. Composition selon la revendication 1, caractérisée en ce que le polyester thermoplastique est du poly(téréphtalate d'alkylène).

3. Composition selon la revendication 2, caractérisée en ce que le poly(téréphtalate d'alkylène) est le poly(téréphtalate de butylène).

4. Composition selon l'une quelconque des revendications 1 à 3, caractérisée en ce que la quantité de composé contenant au moins un groupe époxy est 1 à 30 parties en poids.

5. Composition selon l'une quelconque des revendications 1 à 4, caractérisée en ce que le composé contenant au moins un groupe époxy est un copolymère contenant des groupes époxy et est préparé à partir de monomères insaturés contenant un groupe époxy et de monomères insaturés ne contenant pas un groupe époxy.

6. Composition selon la revendication 5, caractérisée en ce que le copolymère contenant des groupes époxy est un copolymère éthylène/méthacrylate de glycidyle.

7. Composition selon l'une quelconque des revendications 1 à 6, caractérisée en ce que le sel formé de sulfonate organique a la formule:

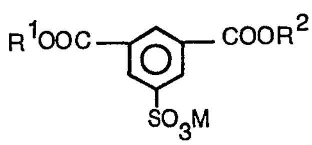

où M est un membre choisi dans le groupe se composant de métaux alcalins, de métaux alcalino-terreux, de zinc et d'aluminium; et $R^1$ et $R^2$ sont des radicaux organiques monovalents choisis dans le groupe se composant de groupes méthyle, éthyle, phényle, 2-hydroxyéthyle et 4-hydroxybutyle.

8. Composition selon l'une quelconque des revendications 1 à 7, caractérisée en ce que le sel formé de sulfonate organique est un sel constitué d'alkylbenzènesulfonate, où le groupe alkyle a 10 à 30 atomes de carbone, et le sel contient un ion métallique choisi dans le groupe se composant de métaux alcalins, de métaux alcalino-terreux, de zinc et d'aluminium.

**Patentansprüche**

1. Thermoplastische Polyesterharzmasse, die je 100 Gewichtsteile eines thermoplastischen Polyesters mit relativen Viskositäten von 1,1 bis 1,8, gemessen in einer o-Chlorphenollösung mit einer Konzentration von 0,5 Gewichts-% bei 25°C, 0,1 bis 40 Gewichtsteile wenigstens einer Verbindung, die wenigstens eine Epoxygruppe enthält, umfaßt, dadurch gekennzeichnet, daß die Masse zusätzlich je

100 Gewichtsteile des thermoplastischen Polyesters 0,001 bis 10 Gewichtsteile wenigstens einer Verbindung aus der Gruppe der organischen Sulfonatsalze der allgemeinen Formel $R^3(SO_3M)_m$ und der organischen Sulfatsalze der allgemeinen Formel $R^4(OSO_3M)_{m'}$, worin M ein Metallatom, $R^3$ Phenyl, Alkylphenyl, worin die Alkylgruppe 10 bis 30 Kohlenstoffatome hat, α-Naphthyl, β-Naphthyl, Dodecylnaphthyl, Allyl oder Methallyl bedeutet, wenn m eine ganze Zahl von 1 bis 3 ist, oder $R^3$ Polystyrol bedeutet, wenn m größer als 3 ist, $R^4$ Alkyl oder eine Polyalkylenoxidgruppe mit 10 bis 30 Kohlenstoffatomen und m' eine ganze Zahl von 1 bis 3 ist, oder der Verbindungen der Formel

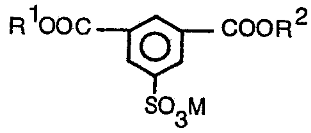

worin $R^1$ und $R^2$ Methyl, Äthyl, Phenyl, 2-Hydroxyäthyl oder 4-Hydroxybutyl bedeuten und M ein Metallatom ist, enthält.

2. Masse nach Anspruch 1, dadurch gekennzeichnet, daß der thermoplastische Polyester Poly-(alkylenterephthalat)ist.

3. Masse nach Anspruch 2, dadurch gekennzeichnet, daß das Poly-(alkylenterephthalat) Poly-(butylenterephthalat) ist.

4. Masse nach einem der Ansprüche 1 bis 3, dadurch gekennzeichnet, daß die Menge der wenigstens eine Epoxygruppe enthaltenden Verbindung 1 bis 30 Gewichtsteile ist.

5. Masse nach einem der Ansprüche 1 bis 4, dadurch gekennzeichnet, daß die wenigstens eine Epoxygruppe enthaltende Verbindung ein Epoxygruppen enthaltendes Copolymeres ist und aus ungesättigten Monomeren mit einer Epoxygruppe und ungesättigten Monomeren ohne eine Epoxygruppe hergestellt ist.

6. Masse nach Anspruch 5, dadurch gekennzeichnet, daß das Epoxygruppen enthaltende Copolymere ein Äthylen/Glycidylmethacrylat-Copolymeres ist.

7. Masse nach einem der Ansprüche 1 bis 6, dadurch gekennzeichnet, daß das organische Sulfonatsalz die Formel

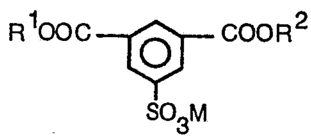

besitzt, worin M aus der Gruppe der Alkalimetalle, Erdalkalimetalle, Zink und Aluminium ausgewählt ist und worin $R^1$ und $R^2$ einwertige organische Reste aus der Gruppe Methyl, Äthyl, Phenyl, 2-Hydroxyäthyl und 4-Hydroxybutyl bedeuten.

8. Masse nach einem der Ansprüche 1 bis 7, dadurch gekennzeichnet, daß das organische Sulfonatsalz ein Alkylbenzolsulfonatsalz ist, worin die Alkylgruppe 10 bis 30 Kohlenstoffatome hat und wobei das Salz ein Metallion aus der Gruppe der Alkalimetalle, Erdalkalimetalle, Zink und Aluminium enthält.